# EUROPEAN PATENT SPECIFICATION

(11) **EP 3 148 903 B1**
(45) Date of publication and mention of the grant of the patent: **24.11.2021**
(21) Application number: 15732469.0
(22) Date of filing: 21.05.2015
(51) Int. Cl.: B65G 47/24, B65G 47/31, B65G 47/14

(54) **DISTRIBUTION SYSTEM FOR SUPPLYING IRREGULARLY SHAPED PRODUCTS SUCH AS PEARS TO A SINGULATING MEANS, AND TRANSPORT SYSTEM AND METHOD THEREFOR**
VERTEILUNGSSYSTEM ZUM ZUFÜHREN UNREGELMÄSSIG GEFORMTER PRODUKTE WIE BIRNEN ZU EINER SINGULARISIERTEN VORRICHTUNG SOWIE TRANSPORTSYSTEM UND VERFAHREN DAFÜR
SYSTÈME DE DISTRIBUTION DESTINÉ À ACHEMINER DES PRODUITS DE FORME IRRÉGULIÈRE TELS QUE DES POIRES JUSQU'À UN MOYEN DE SÉPARATION, ET SYSTÈME ET PROCÉDÉ DE TRANSPORT ASSOCIÉS

(30) Priority: 28.05.2014 NL 2012909
(43) Date of publication of application: 05.04.2017
(73) Proprietor: De Greef's Wagen-, Carrosserie- en Machinebouw B.V., 4196 JB Tricht (NL)
(72) Inventor: VAN DE WERKEN, Mario Arnold, NL-5307 VG Poederoijen (NL); RUISSEN, Hendrik Krijn, NL-4194 VA Meteren (NL); VAN OOIJEN, Hendrik Jan, NL-Bruchem 5314 Bh (NL)
(74) Representative: Verdijck, Gerardus
(86) International application number: PCT/NL2015/050366
(87) International publication number: WO 2015/183078

(56) References cited:
- FR-A1- 2 800 052
- JP-A- H08 104 420
- JP-A- H09 118 426
- JP-A- H10 120 159
- US-A- 3 837 469
- US-A- 5 314 056
- US-A- 5 871 080

## Description

The present invention relates to a distribution system, particularly a belt distributor, for supplying irregularly shaped products in distributed manner to a singulator. These products are more particularly irregularly shaped products such as pears, for instance Conference pears, and other irregular products such as peppers, paraguayo peaches, beef tomatoes, onions and potatoes.

In systems known in practice for processing irregularly shaped products, particularly pears, it is known to provide a distribution system in a sorting line. The pears are supplied here from a conveyor belt and then distributed over one or more parallel tracks of V-belts with which the pears are carried onto a singulator. Downstream of the singulator the products are sorted and further processed. The V-belt known in practice consists of two conveyor belts arranged at an angle relative to each other which provide for the transport of the pears. One of the problems in practice is that differences in speed easily cause abrasion damage to the products. It is also found difficult to properly position irregularly shaped products on such V-belts.

JP H10 120159 A and JP H09 118426 A disclose sorting devices with one or more tracks of V-belts.

JP H08 104 420 A discloses a distribution system for supplying irregularly shaped products to a singulator in distributed manner. The known distribution system comprises a frame provided with a feed side and a discharge side and a number of belts arranged in or on the frame for transport of the products from a feed side to a discharge side of the distribution system. At least some of the belts are placed in series. A support is arranged on or in the frame for the number of belts. A drive system is operatively arranged with the number of belts and configured to operate at least some of the belts placed successively in series during use at higher speed as seen in transport direction such that during use the irregularly shaped products are placed substantially at a regular mutual distance in the transport direction.

A problem which occurs in practice with the processing of pears on such a conventional distribution system is that the products come to lie together in pairs on the singulator and/or the singulator has many empty positions during use. This latter is to the detriment of the overall processing capacity of the sorting line. In addition, damage to the products, particularly to the stems of the pears, occurs frequently due to the configuration of the V-belts.

The object of the present invention is to provide a distribution system for supplying the products to a singulator in evenly distributed manner such that the capacity of the processing line is increased and/or damage to these products is avoided, wherein the above stated problems are obviated or at least reduced.

The present invention provides for this purpose a distribution system according to claim 1 for supplying irregularly shaped products such as pears to a singulator in distributed manner.

By providing a number of trough-like belts products such as pears can be transported in simple manner with the belt distributor from a feed conveyor to a singulator. Compared to a conventional V-belt comprising two belt conveyors placed at an angle relative to each other, the trough-like belt can be given a relatively simple construction. The trough-like belt is preferably provided as a troughed belt. The construction according to the invention comprises a single belt per track as seen in width direction. Owing to this construction the invention can transfer the products in effective manner from a feed conveyor, such as a feed belt, to a singulator for further processing. The distribution system can process the products with a significantly higher capacity compared to conventional systems. In a currently preferred embodiment a capacity increase of 50% can thus be realized. The overall processing capacity of the processing line or sorting line is hereby also significantly increased. This means that the processing of irregular products such as pears can be performed in more efficient manner.

In addition, the use of the trough-like belts avoids for instance a part of the product, such as the stem of a pear, coming to lie in the intermediate space between the two conventional belt conveyors placed at an angle and the product in this way possibly being damaged. The use of conveyor belts therefore contributes toward maintaining the overall quality of the products to be processed. This is particularly relevant for irregularly shaped products, such as pears and for instance also peppers, paraguayo peaches, beef tomatoes, onions and potatoes, which can become "caught" relatively easily during transport and thereby incur damage. So-called abrasion damage to products can also be reduced, for instance by about 10-20% for such products. The dimension of the trough-like belt as seen in transverse direction of the direction of transport is adapted to the product for transporting. The trough-like belts of the distribution system are supported using a support, which is arranged in or on the frame, in a manner such that a desired cross-sectional U-shape or V-shape can be realized. The product can hereby be transported in effective and safe manner.

The distribution system according to the invention comprises at least a configuration wherein at least some of the trough-like belts are placed in series. A product is taken from a feed conveyor here and carried onto a first trough-like belt of the number of the trough-like belts of the distribution system placed in series. At the end of this first trough-like belt the product is transferred to a second trough-like belt placed successively in series and transported further. In a currently preferred embodiment three trough-like belts are in this way placed in series per track. It will be apparent that the number of trough-like belts placed in series can be adapted to the specific product and/or the distance to be bridged by the products between for instance the feed conveyor and the singulator. It is in addition possible to provide a plurality of tracks and to distribute products from the feed conveyor over a number of tracks, for instance two, three, four or more, such as ten parallel tracks. Each track will then consists of a number of trough-like belts placed successively in series.

According to the invention the distribution system according to the invention is provided with a drive system configured such that during use at least some of the trough-like belts placed successively in series as seen in transport direction are operated at a higher speed. This achieves that products in the distribution system are transported at increasing speed as seen in transport direction and can be carried a greater distance from each other. This is effective for the singulator.

The products are preferably supplied lying against each other on the feed conveyor. Having arrived at the distribution system, the products are placed close together and/or against each other on the first trough-like belt. A well-defined intermediate distance can be provided between the individual products by having the successive trough-like belts run faster. This well-defined intermediate distance then achieves that the singulator can be operated in effective manner. This is realized in that the singulator can be operated with a good degree of utilization, i.e. there are few empty positions. This increases the capacity of the overall sorting system of which the distribution system according to the invention can form part. With a good degree of utilization the speed of the singulator, and thereby of the other components of the overall sorting line such as the distribution system according to the invention, can possibly also be operated at a higher speed. The overall capacity of the sorting line can hereby be further increased.

The trough-like belts in the distribution system according to the invention are configured such that during use the irregularly shaped products are placed substantially in length direction of the product in the transport direction. This positioning of the irregularly shaped products is further stimulated by operating the trough-like belts placed successively in series at increasing speed as seen in transport direction, whereby sufficient intermediate space is realized. Carrying the relevant product in length direction in the distribution system has the advantage that the products are presented in the desired configuration to the singulator. The transition of products between trough-like belts placed successively in series likewise has a positive effect on the placing of the products in the desired configuration, particularly in the case of irregularly shaped products such as pears. The singulator can then perform the singulating process and optional further processing steps from this controlled and desired orientation. These steps can hereby be performed in more effective manner. The risk of malfunctions is hereby also reduced, including the risk of products coming to lie in pairs on the singulator. Such a paired position of products makes proper processing more difficult and/or results in products possibly being damaged by the unnecessary contact.

The distribution system according to the invention advantageously places particularly elongate products, such as Conference pears, in transport direction of the distribution system as seen in their length direction. The products are also distributed in relatively controllable manner by making use of differences in speed applied between the trough-like belts placed in series. The speeds, and differences in speed, of the successive trough-like belts are preferably individually controllable, for instance with frequency-controlled motors. This makes it possible to adapt speeds and differences in speed to specific products. In addition to the above discussed reduction in the damage possibly caused to the products and the possibly higher degree of utilization, also in the case of irregularly shaped products, an additional effect is that manual inspection of irregularly shaped products during the processing operation, which is currently required in practice, can hereby be dispensed with and/or the overall sorting line can be operated at a higher speed.

According to the present invention at least some of the trough-like belts placed successively in series are provided as seen in transport direction with a narrower operative width for better distribution of the products over the belt.

By giving each successive trough-like belt a narrower operative width as seen in transport direction the products are better distributed over the length of the distribution system. In a currently preferred embodiment this narrowing is embodied in stepwise manner. The irregularly shaped products are in addition brought into a desired configuration by the increasingly narrowing belts, whereby the subsequent processing steps in the singulator and other parts of the sorting line can be performed in more effective manner.

In a currently preferred embodiment the trough-like belt, which is provided further along in the distribution system as seen in transport direction, is embodied with a physically narrower belt. In an alternative embodiment the physical width of the belts is the same, although a narrower operative width can effectively be provided by changing the shape, particularly by making the upright edges higher. In further alternative manner the operative width of the belt can be narrowed by using additional guides or dividing parts.

It has been found that a combination of the distribution system with application of an optionally stepwise narrowing trough-like belt in the direction of movement and an elongate orientation of the products in the direction of movement particularly results in a good distribution. The singulator can hereby be operated in effective manner and damage to stems and other parts of the products, such as pears, is avoided.

In an advantageous preferred embodiment according to the invention the support of the belts comprises a profile folded in a U-shape or V-shape or combination thereof.

By providing a folded profile with the desired U- or V-shape, or combination thereof as a U with oblique legs, the trough-like belt is supported in effective manner and given the desired form for transporting and orienting/distributing the irregularly shaped products.

The folded profile preferably extends over substantially the whole length of the number of trough-like belts placed in series. A support can hereby be provided over substantially the whole length of the distribution system in effective manner, and sagging of the belt is for instance prevented. The substantially full support of the trough-like belt further ensures that the orientation of the product is retained once it has been placed in the desired orientation,

In a further advantageous preferred embodiment according to the present invention the entry side of at least one of the number of trough-like belts as seen in transport direction is free of support for the purpose of imparting a resilient and/or damping effect to a product at the transition from a preceding trough-like belt or a conveyor.

Providing a kind of free suspension of the entry part of the trough-like belt as seen in transport direction achieves that a product being carried from a preceding belt or conveyor to the respective trough-like belt is received in to some extent resilient and/or damping manner by the trough-like belt. This achieves that the risk of damage to the product is further reduced. It has been found that particularly the combination of the free suspension and the use of the return bar significantly reduces the risk of product damage.

In a further advantageous preferred embodiment according to the present invention an outer end of at least one of the number of trough-like belts as seen in transport direction is provided with a return bar or return element.

Providing a return bar or a return element such as a return plate at the outer end of a trough-like belt achieves that the subsequent conveyor belt can be provided in connecting manner with only a very limited height difference. In conventional systems the V-belts are provided at the outer end with a drive roller or return roller of a generally considerable diameter. The subsequent conveyor therefore lies under this roller, whereby products fall from the upper surface of the first conveyor onto the upper surface of the subsequent second conveyor over at least the distance defined by the diameter of the roller. This may cause damage to the product. This drop height can be greatly reduced by using a return element or return bar, whereby the risk of product damage is also greatly reduced. In addition, the use of a return element or return bar brings about a relatively sharp transition, i.e. a knife-edge transfer, whereby products are prevented from catching at belt transitions.

In a currently preferred embodiment the return bar or the return element is provided with a rounding of a diameter or thickness in the range of 1-20 mm, preferably in the range of 2-15 mm and most preferably in the range of 6-10 mm. Owing to this limited diameter or thickness of the return bar the drop height at the transition between successive trough-like belts is greatly reduced compared to conventional systems.

The return bar or the return element is preferably arranged fixedly in or on the frame. In this embodiment the return bar or the return element does not therefore co-rotate with the movement of the trough-like belt, which as it were slides over the return bar. It has been found that such a construction does not result in wear to the trough-like belt and further simplifies the construction.

In a further advantageous embodiment according to the invention the distribution system comprises a driven brush positioned at or close to a transition between belts and/or at or close to the feed side and/or discharge side configured for throughfeed of products.

Products are guided better by one or more brushes being provided at or close to one or more transitions. This is particularly advantageous for throughfeed of products with stems in order to prevent the stem or other parts catching at the transition.

The present invention further relates to a transport system for irregularly shaped products such as pears, wherein the transport system comprises:
- a feed conveyor;
- a distribution system as described above placed connecting to the feed conveyor as seen in transport direction;
- a singulator placed connecting to the distribution system as seen in transport direction; and
- a controller for controlling at least the distribution system and the singulator, wherein the controller is configured such that at least the speed of the distribution system is adapted to the speed of the singulator.

Such a transport system provides the same effects and advantages as described for the distribution system. It has been found particularly that the sorting line provided with such a transport system can be operated with great effectiveness such that a higher processing capacity is attainable therewith. Damage occurring to products can also be reduced, which further increases the overall efficiency of the sorting process.

The present invention further also relates to a method for supplying irregularly shaped products such as pears to a singulator and/or positioning thereof for assessment and/or packaging thereof, comprising the steps of:
- carrying the products onto a distribution system as described above;
- having at least some of the trough-like belts placed successively in series run at higher speed as seen in transport direction; and
- transferring the products to a singulator and/or an assessing means and/or packing means.

Such a method provides the same effects and advantages as described for the distribution system and/or transport system. It has been found particularly that the capacity of the whole process can be increased and/or the quality of the products can be better preserved. The assessing means is for instance a conveyor provided with a vision system. The packing means is for instance an automatic packing machine.

Further advantages, features and details of the invention are elucidated on the basis of preferred embodiments thereof, wherein reference is made to the accompanying drawings, in which:
- figure 1 shows a view of a transport system with a distribution system according to the invention,
- figure 2 shows a detail of the distribution system of figure 1;
- figure 3 shows a top view of the transport system of figure 1;
- figure 4 shows a cross-section of the distribution system of figure 1 with additional driven brushes at transitions; and
- figure 5 shows a detail view from the distribution system of figure 3 with optional brushes of figure 4.

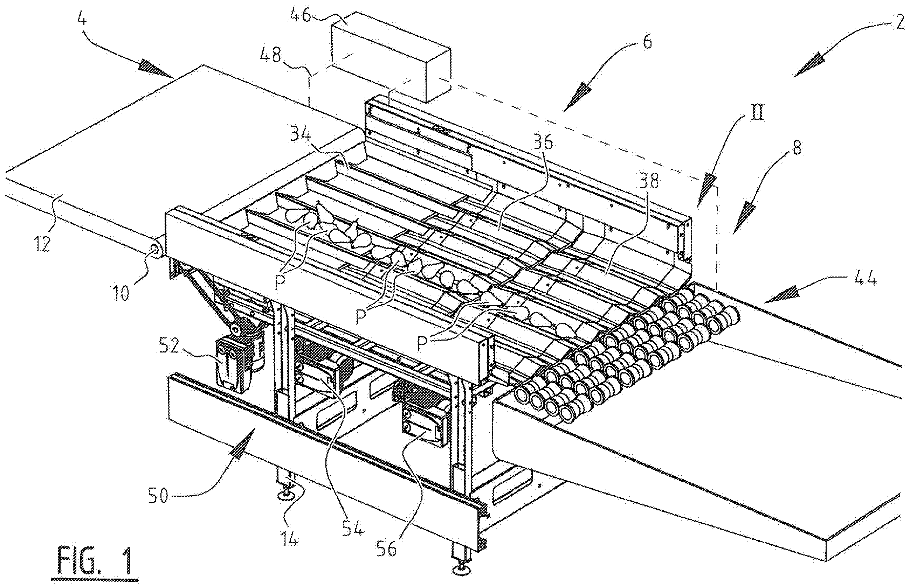

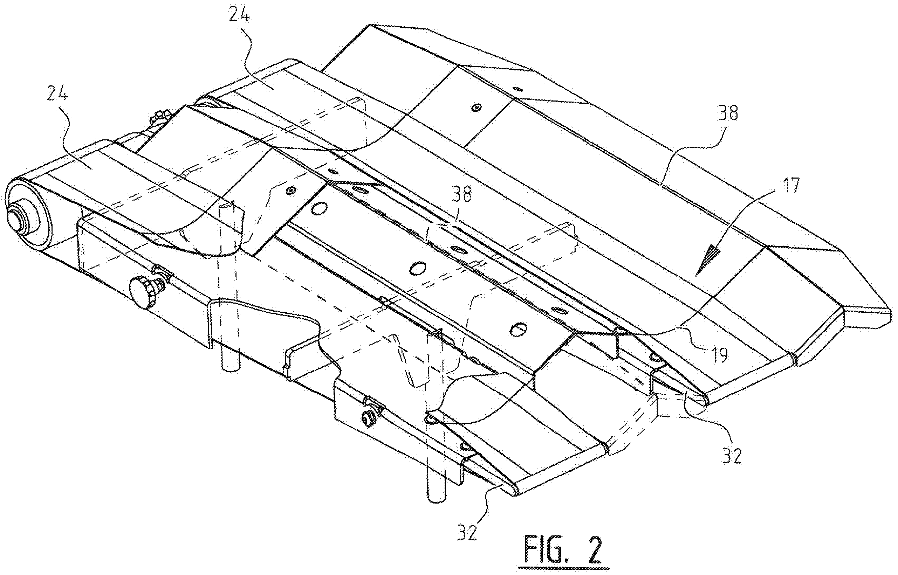

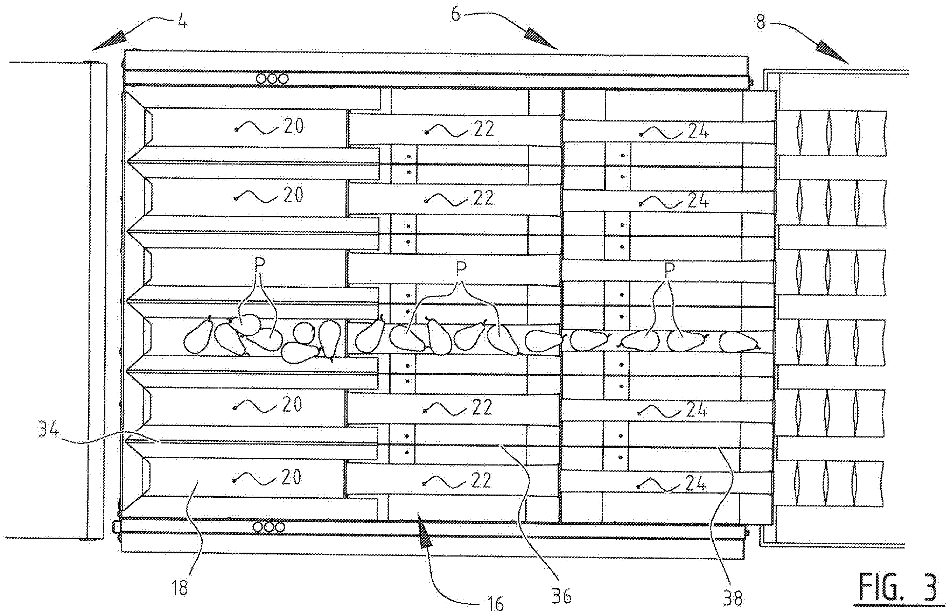

Transport system 2 (figures 1-3) comprises feed conveyor 4 embodied as feed belt, distribution system 6 and singulator 8. Pears P are supplied over feed belt 4 and move via distribution system 6 to singulator 8 for further processing. Feed belt 4 is provided with a drive 10 and belt 12 on which products P are positioned. Distribution system 6 is provided with frame 14 comprising a support 16. In the shown embodiment support 16 is manufactured from a combination of elements of folded stainless steel plate material. The shown support 16 defines a combined U- and V-shaped profile 17, i.e. a U-shape with oblique legs. Trough shape 19 is hereby realized.

In the shown embodiment distribution system 6 is provided with six parallel tracks 18. Track 18 comprises a first belt 20, a second, slightly narrower belt 22 and a third, still narrower belt 24 which are provided successively in the transport direction of products P.

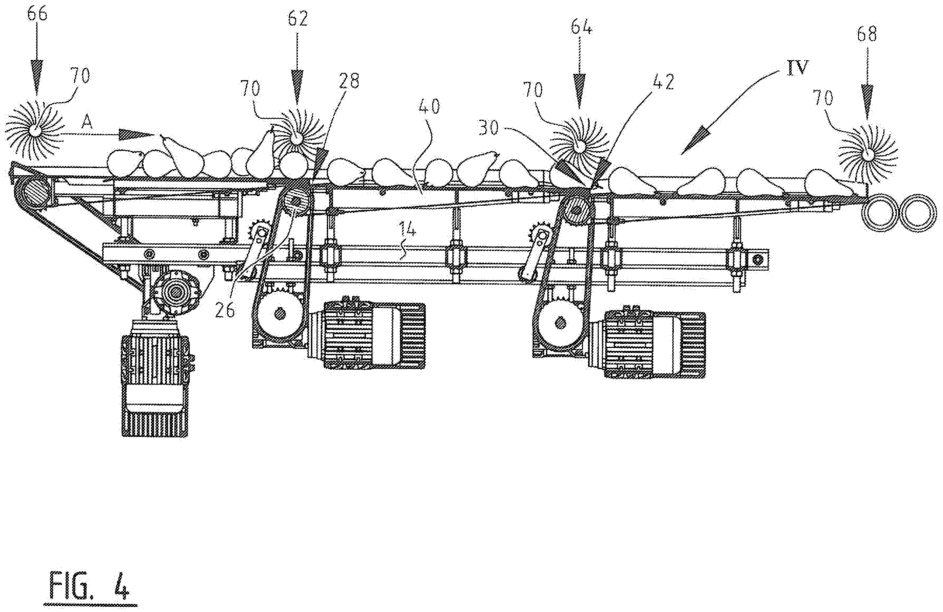

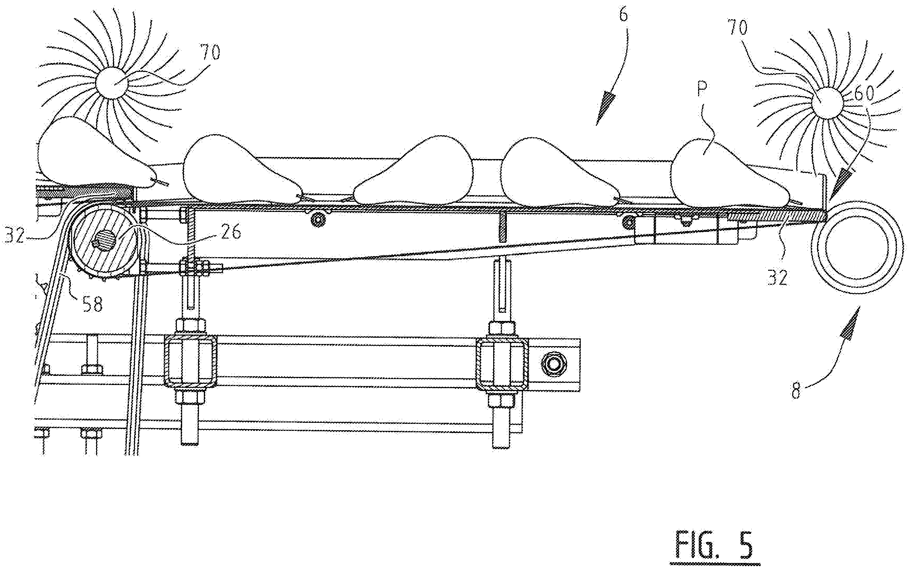

Each conveyor belt 20, 22, 24 (figures 4 and 5) is provided with drive roller 26 on entry side 28 of belt 20, 22, 24 and provided with return plate 32 on end side 30 of belts 20, 22, 24. In shown distribution system 6 pears P are positioned increasingly unambiguously or uniformly in longitudinal direction in transport direction A.

In the shown embodiment of distribution system 6 parallel tracks 18 are realized by providing a number of parallel series of conveyor belts 20, 22, 24 in distribution system 6. Each track 18 is in this way provided with an individual series of conveyor belts 20, 22, 24. In the shown embodiments individual tracks 18 are separated in transverse direction of each other using successive guiding intermediate elements 34, 36 and 38. Intermediate elements 34, 36 and 38 preferably form part of support 16.

Each belt 20, 22, 24 (figures 4 and 5) is provided with support 40 of profiled plate material. In the shown embodiment return plate 32 is provided with a thickness of about 8 mm, whereby drop height 42 between two successive conveyor belts 20, 22, 24 can remain limited to about 8-12 mm.

Singulator 8 can be embodied with diverse parallel tracks 44 which preferably correspond to the number of tracks 18 on distribution system 6. Singulator 8 is provided with brushes and/or diabolos or other usual elements for performing the singulating and the correct orientation of products P.

In the shown embodiment controller 46 is provided for the purpose of controlling preferably feed belt 4, distribution system 6 and singulator 8 with control signals 48. If desired, controller 46 can form part of a comprehensive control system for the whole sorting line.

Distribution system 6 is provided with a drive system 50 which is provided in the shown embodiment with a first drive 52, second drive 54 and third drive 56 which enable the individual conveyor belts 20, 22, 24 to function at their own speed using drive roller 26 and drive belt 58. It is also possible if desired to allow the individual conveyor belts 20, 22, 24 to function at individual speeds on the basis of a single drive and using a transmission. Belts 20, 22, 24 are preferably separately adjustable in order to obtain more options for a fine adjustment. In the shown embodiment a drive 52, 54, 56 drives the corresponding belts 20, 22, 24 in all tracks 18. Distribution system 6 with all tracks 18 is hereby driven using only three separately adjustable drives 52, 54, 56. In the shown embodiment return plate 32 is provided with a rounding 60 in order to avoid wear to belts 20, 22, 24 and in addition allow the smoothest possible transition of products P to a subsequent conveyor.

One or more brushes 70 (figures 4 and 5) are optionally provided close to transitions 62, 64 within distribution system 6 and/or close to transitions 66, 68 between distribution system 6 and feed conveyor 4 and/or singulator 8. In the shown embodiment brushes 70 are connected to drives 52, 54, 56 or provided with their own shared or individual drive. Brushes 70 improve the transition of products P between the separate conveyors and/or belts.

Products P, such as Conference pears, are supplied on conveyor belt 4 such that during use products P lie connecting to or against each other. Products P are transferred to first conveyor belt 20 of distribution system 6 which runs at a relatively low speed. At the end of conveyor belt 20 product P is transferred to second conveyor belt 22 which is embodied with a smaller operative width and runs at a slightly higher speed relative to first conveyor belt 20, whereby products P are moved further into a desired longitudinal orientation as seen in the transport direction. Owing to the higher speed products P are also carried a distance from each other. In the shown embodiment products P are transferred at the end of second conveyor belt 22 to a third conveyor belt 24 which is embodied with an even smaller operative width in transverse direction of the transport direction and runs at an even higher speed. Products P of irregular shape are hereby moved further into the desired longitudinal orientation and carried a slightly greater controlled distance from each other. At the end of third trough-like belt 24 products P are transferred to singulator 8 for the singulating process and optional further follow-on operations in the whole sorting line.

The speed of distribution system 6 as a whole and the individual conveyor belts 20, 22, 24 separately can be adjusted using controller 46. Coordination with the other parts of the sorting line, such as singulator 8, is provided here by controller 46. It is thus possible for instance to adjust, in particular increase, the relative speed differences between belts 20, 22, 24 in the unlikely event products P are found to be lying on singulator 8 in pairs. If it is noted that there are empty positions on singulator 8, the overall speed of distribution system 6 can be increased by controller 46. The belt speed of feed conveyor 4 is preferably also increased here. This results in the best possible operation of transport system 2 as a whole and distribution system 6 in particular.

The present invention is by no means limited to the above described preferred embodiments thereof. The rights sought are defined by the following claims, within the scope of which further modifications can be envisaged.

## Claims

1. Distribution system (6) for supplying irregularly shaped products such as pears to a singulator (8) in distributed manner, comprising:
- a frame (14) provided with a feed side and a discharge side;
- a number of belts (20, 22, 24) arranged in or on the frame (14) for transport of the products (P) from a feed side to a discharge side of the distribution system (6), wherein at least some of the belts (20, 22, 24) are placed in series;
- a support (16) arranged on or in the frame (14) for the number of belts (20, 22, 24); and
- at least one drive system (50) arranged operatively with the number of belts (20, 22, 24), wherein the drive system (50) is configured to operate at least some of the belts (20, 22, 24) placed successively in series during use at higher speed as seen in transport direction, wherein
- the belts (20, 22, 24) are trough-like belts,
- wherein the trough-like belts (20, 22, 24) are configured such that during use the irregularly shaped products are placed substantially at a regular mutual distance in length direction of the product in the transport direction,
- wherein at least some of the trough-like belts (20, 22, 24) placed successively in series are provided as seen in transport direction with a narrower operative width for better distribution of the products over the belt,
- wherein, in use, a product is carried onto a first trough-like belt of the number of the trough-like belts (20, 22, 24) placed in series, wherein at the end of the first trough-like belt, the product is transferred to a second trough-like belt of the number of the trough-like belts (20, 22, 24) placed successively in series and transported further,
- whereby products (P) are moved further into a desired longitudinal orientation as seen in the transport direction.

2. Distribution system as claimed in claim 1, wherein the support (16) comprises a U-shaped or V-shaped profile or combination thereof.

3. Distribution system as claimed in claim 2 wherein the folded profile extends over substantially the length of the number of trough-like belts (20, 22, 24) placed in series.

4. Distribution system as claimed in one or more of the foregoing claims, wherein the entry side of at least one of the number of trough-like belts (20, 22, 24) as seen in transport direction is free of support for the purpose of imparting a resilient and/or damping effect to a product at the transition from a preceding trough-like belt or conveyor.

5. Distribution system as claimed in one or more of the foregoing claims, wherein an outer end of at least one of the number of trough-like belts (20, 22, 24) as seen in transport direction is provided with a return bar or return element.

6. Distribution system as claimed in claim 5 wherein the return bar or the return element is provided with a rounding of a diameter or thickness in the range of 1-20 mm, preferably in the range of 2-15 mm and most preferably in the range of 6-10 mm.

7. Distribution system as claimed in claim 5 or 6, wherein the return bar or the return element is arranged fixedly in or on the frame (14).

8. Distribution system as claimed in one or more of the foregoing claims, further comprising a driven brush (70) positioned at or close to a transition between belts and/or at or close to the feed side and/or discharge side configured for throughfeed of products.

9. Transport system for irregularly shaped products such as pears, comprising:
- a feed conveyor (4); ;
- a distribution system (6) as claimed in one or more of the foregoing claims placed connecting to the feed conveyor as seen in transport direction;
- a singulator (8) placed connecting to the distribution system as seen in transport direction; and
- a controller (46) for controlling at least the distribution system (6) and the singulator (8), wherein the controller (46) is configured such that at least the speed of the distribution system is adapted to the speed of the singulator.

10. Method for supplying irregularly shaped products such as pears to a singulator (8) comprising the steps of:
- carrying the products onto a distribution system (6) as claimed in one or more of the claims 1-8;
- having at least some of the trough-like belts (20, 22, 24) placed successively in series run at higher speed as seen in transport direction; and
- transferring the products to a singulator (8).

11. Method for positioning irregularly shaped products such as pears for assessment and/or packaging of the products, comprising the steps of:
- carrying the products onto a distribution system (6) as claimed in one or more of the claims 1 - 8;
- having at least some of the trough-like belts (20, 22, 24) placed successively in series run at higher speed as seen in transport direction; and
- transferring the products to an assessing means and/or packing means.

## Patentansprüche

1. Verteilungssystem (6) zum Zuführen unregelmäßig geformter Produkte wie Birnen an einen Singulator (8) in verteilter Weise, das aufweist:
- einen Rahmen (14), der mit einer Zuführungsseite und einer Ausgabeseite vorgesehen ist;
- mehrere Riemen (20, 22, 24), die in oder an dem Rahmen (14) zum Transport der Produkte (P) von einer Zuführungsseite zu einer Ausgabeseite des Verteilungssystems (6) angeordnet sind, wobei wenigstens einige der Riemen (20, 22, 24) in Reihe angeordnet sind;
- einen Träger (16), der an oder in dem Rahmen (14) für die mehreren Riemen (20, 22, 24) angeordnet ist; und
- wenigstens ein Antriebssystem (50), das betriebsfähig mit mehreren Riemen (20, 22, 24) angeordnet ist, wobei das Antriebssystem (50) ausgestaltet ist, wenigstens einige der Riemen (20, 22, 24), die nacheinander in Reihe angeordnet sind, in einer Transportrichtung betrachtet während der Verwendung in einer höheren Geschwindigkeit, zu betreiben, wobei
- die Riemen (20, 22, 24) muldenförmige Riemen sind,
- wobei die muldenförmigen Riemen (20, 22, 24) dergestalt ausgestaltet sind, dass während der Verwendung die unregelmäßig geformten Produkte im Wesentlichen in einem regelmäßigen Abstand zueinander in der Längsrichtung des Produkts in der Transportrichtung angeordnet sind,
- wobei wenigstens einige der aufeinanderfolgend in Reihe angeordneten muldenartigen Riemen (20, 22, 24) in der Transportrichtung betrachtet mit einer schmaleren operativen Breite für eine bessere Verteilung der Produkte entlang dem Riemen angeordnet sind,
- wobei in der Verwendung ein Produkt auf einem ersten muldenartigen Riemen der mehreren in Reihe angeordneten muldenartigen Riemen (20, 22, 24) transportiert wird, wobei am Ende des ersten muldenartigen Riemens das Produkt an einen zweiten muldenartigen Riemen der mehreren nacheinander in Reihe angeordneten muldenartigen Riemen (20, 22, 24) übertragen wird und weitertransportiert wird,
- wobei die Produkte (P) in einer gewünschten Längsrichtung in der Transportrichtung betrachtet weiterbewegt werden.

2. Verteilungssystem nach Anspruch 1, wobei der Träger (16) ein U-förmiges oder V-förmiges Profil oder eine Kombination daraus aufweist.

3. Verteilungssystem nach Anspruch 2, wobei das gefaltete Profil über im Wesentlichen die Länge der mehreren in Reihe angeordneten muldenartigen Riemen (20, 22, 24) verläuft.

4. Verteilungssystem nach einem oder mehreren der vorhergehenden Ansprüche, wobei die Eintrittsseite von wenigstens einem von den mehreren muldenartigen Riemen (20, 22, 24) in der Transportrichtung betrachtet keinen Träger zu dem Zweck hat, einen elastischen und/oder Dämpfungseffekt auf ein Produkt am Übergang von einem vorhergehenden muldenartigen Riemen oder Förderband auszuüben.

5. Verteilungssystem nach einem oder mehreren der vorhergehenden Ansprüche, wobei ein äußeres Ende von wenigstens einem von den mehreren wannenartigen Riemen (20, 22, 24) in der Transportrichtung betrachtet mit einer Rückkehrleiste oder einen Rückkehrelement vorgesehen ist.

6. Verteilungssystem nach Anspruch 5, wobei die Rückkehrleiste oder das Rückkehrelement mit einer Rundung eines Durchmessers oder Dicke im Bereich von 1-20 mm, vorzugsweise im Bereich von 2-15 mm und am meisten bevorzugt im Bereich von 6-10 mm vorgesehen ist.

7. Verteilungssystem nach Anspruch 5 oder 6, wobei die Rückkehrleiste oder das Rückelement in oder an dem Rahmen (14) fixiert angeordnet ist.

8. Verteilungssystem nach einem oder mehreren der vorhergehenden Ansprüche, das weiterhin eine angetriebene Bürste (70) aufweist, die an oder nahe eines Übergangs zwischen den Riemen und/oder an oder nahe der Zuführungsseite und/oder der Ausgabeseite angeordnet ist, die zur Durchführung der Produkte ausgestaltet ist.

9. Transportsystem für unregelmäßig geformte Produkte wie Birnen, das aufweist:
- ein Zuleitungsförderband (4);
- ein Verteilungssystem (6) nach einem der vorhergehenden Ansprüche, das angeordnet ist, um mit dem Zuleitungsförderband in der Transportrichtung betrachtet verbunden zu sein;
- einen Singulator (8), der angeordnet ist, um mit dem Verteilungssystem in der Transportrichtung verbunden zu sein; und
- eine Steuereinheit (46) zum Steuern wenigstens des Verteilungssystems (6) und des Singulators (8),
wobei die Steuereinheit (46) dergestalt ausgestaltet ist, dass wenigstens die Geschwindigkeit des Verteilungssystems an die Geschwindigkeit des Singulators angepasst ist.

10. Verfahren zum Zuführen unregelmäßig geformter Produkte wie Birnen an einen Singulator (8), das aufweist:
- Transportieren der Produkte auf einem Verteilungssystem (6) nach einem der Ansprüche 1 bis 8;
- Aufweisend, dass wenigstens einige der nacheinander in Reihe angeordneten muldenförmigen Riemen (20, 22, 24) in der Transportrichtung betrachtet in einer höheren Geschwindigkeit betrieben werden; und
- Übertragen der Produkte an einen Singulator (8).

11. Verfahren zum Positionieren unregelmäßig geformter Produkte wie Birnen zur Prüfung und/oder Verpackung der Produkte, das die Schritte aufweist:
- Transportieren der Produkte auf einem Verteilungssystem (6) nach einem der Ansprüche 1 bis 8;
- Aufweisend, dass wenigstens einige der nacheinander in Reihe angeordneten muldenförmigen Riemen (20, 22, 24) in der Transportrichtung betrachtet in einer höheren Geschwindigkeit betrieben werden; und
- Übertragen der Produkte an ein Prüfmittel und/oder Verpackungsmittel.

## Revendications

1. Dispositif de distribution (6) destiné à délivrer des produits de forme irrégulière tels que des poires à un moyen de séparation (8) d'une manière répartie, comprenant :
un châssis (14) comportant un côté d'alimentation et un côté de déchargement ;
un certain nombre de bandes (20, 22, 24) agencées dans ou sur le châssis (14) afin d'assurer le transport des produits (P) à partir d'un côté d'alimentation vers un côté de déchargement du dispositif de distribution (6), dans lequel au moins certaines des bandes (20, 22, 24) sont placées en série ;
un support (16), agencé sur ou dans le châssis (14), pour les différentes bandes (20, 22, 24) ; et
au moins un dispositif d'entraînement (50) agencé de manière opérationnelle avec les différentes bandes (20, 22, 24), dans lequel le dispositif d'entraînement (50) est configuré afin de commander au moins certaines des bandes (20, 22, 24) placées successivement en série pendant l'utilisation à vitesse plus élevée, telles que vues dans la direction de transport, dans lequel
les bandes (20, 22, 24) sont des bandes en forme de cuvette,
dans lequel les bandes en forme de cuvette (20, 22, 24) sont configurées de telle sorte que pendant l'utilisation, les produits de forme irrégulière sont placés sensiblement à une distance mutuelle régulière suivant la direction longitudinale du produit dans la direction de transport,
dans lequel au moins une partie des bandes en forme de cuvette (20, 22, 24) placées successivement en série sont agencées, telles que vues suivant la direction de transport, avec une largeur effective plus étroite afin d'assurer une meilleure distribution des produits au-dessus de la bande,
dans lequel, en utilisation, un produit est supporté sur une première bande en forme de cuvette parmi les différentes bandes en forme de cuvette (20, 22, 24) placées en série, dans lequel, à l'extrémité de la première bande en forme de cuvette, le produit est transféré à une seconde bande en forme de cuvette parmi les différentes bandes en forme de cuvette (20, 22, 24) placées successivement en série et transportées plus loin,
de telle sorte que des produits (P) sont déplacés plus loin suivant une orientation longitudinale désirée telle que vu dans la direction de transport.

2. Dispositif de distribution selon la revendication 1, dans lequel le support (16) comprend un profil en forme de U ou en forme de V ou une combinaison de ceux-ci.

3. Dispositif de distribution selon la revendication 2 dans lequel le profil plié s'étend sensiblement sur la longueur des différentes bandes en forme de cuvette (20, 22, 24) placées en série.

4. Dispositif de distribution selon une ou plusieurs des revendications précédentes, dans lequel le côté d'entrée d'au moins l'une des différentes bandes en forme de cuvette (20, 22, 24) tel que vu dans la direction de transport est exempt de support afin de communiquer un effet élastique et/ou amortisseur à un produit au niveau de la transition à partir d'une bande en forme de cuvette ou convoyeur précédant.

5. Dispositif de distribution selon une ou plusieurs des revendications précédentes, dans lequel une extrémité externe d'au moins l'une des différentes bandes en forme de cuvette (20, 22, 24) telle que vue dans la direction de transport comporte une barre de retour ou un élément de retour.

6. Dispositif de distribution selon la revendication 5, dans lequel la barre de retour ou l'élément de retour comporte un arrondi d'un diamètre ou épaisseur compris dans la plage de 1 à 20 mm, de préférence, dans la plage de 2 à 15 mm et, plus préférablement, dans la plage de 6 à 10 mm.

7. Dispositif de distribution selon la revendication 5 ou 6, dans lequel la barre de retour ou l'élément de retour est agencé à demeure dans ou sur le châssis (14).

8. Dispositif de distribution selon une ou plusieurs des revendications précédentes, comprenant, en outre, une brosse (70) entraînée, positionnée sur ou à proximité d'une transition entre des bandes et/ou sur ou à proximité du côté d'alimentation et/ou du côté de déchargement, configurée afin d'assurer l'alimentation des produits.

9. Dispositif de transport destiné à des produits de forme irrégulière tels que des poires, comprenant :
un convoyeur d'alimentation (4) ;
un dispositif de distribution (6) selon une ou plusieurs des revendications précédentes placé en liaison avec le convoyeur d'alimentation tel que vu dans la direction de transport ;
un moyen de séparation (8) placé en liaison avec le dispositif de distribution tel que vu dans la direction de transport ; et
une unité de commande (46) destinée à commander au moins le dispositif de distribution (6) et le moyen de séparation (8),
dans lequel l'unité de commande (46) est configurée de telle sorte qu'au moins la vitesse du dispositif de distribution est adaptée à la vitesse du moyen de séparation.

10. Procédé de fourniture de produits de forme irrégulière tels que des poires à un moyen de séparation (8) comprenant les étapes de :
transport des produits sur un dispositif de distribution (6) selon une ou plusieurs des revendications 1 à 8 ;
comportant au moins certaines des bandes en forme de cuvette (20, 22, 24) placées successivement en série, entraînées à une vitesse plus élevée telles que vues dans la direction de transport ; et
transfert des produits vers un moyen de séparation (8).

11. Procédé de positionnement de produits de forme irrégulière tels que des poires afin d'assurer le contrôle et/ou le conditionnement des produits, comprenant les étapes de :
transport des produits sur un dispositif de distribution (6) selon une ou plusieurs des revendications 1 à 8 ;
sur lequel au moins une partie des bandes en forme de cuvette (20, 22, 24) sont placées successivement en série, entraînées à une vitesse supérieure, telles que vues dans la direction de transport ; et
transfert des produits vers un moyen de contrôle et/ou un moyen de conditionnement.
